Europäisches Patentamt

European Patent Office

Office européen des brevets

(19)

(11) Veröffentlichungsnummer : **0 433 563 B1**

(12)                    **EUROPÄISCHE PATENTSCHRIFT**

(45) Veröffentlichungstag der Patentschrift :
10.11.93 Patentblatt 93/45

(51) Int. Cl.⁵ : **B29C 43/24,** // B29K21:00,
B29L7:00

(21) Anmeldenummer : 90117645.3

(22) Anmeldetag : 13.09.90

(54) **Verfahren zur Herstellung einer blasenfreien, kalandrierten Gummibahn.**

(30) Priorität : 22.12.89 DE 3942505

(43) Veröffentlichungstag der Anmeldung :
26.06.91 Patentblatt 91/26

(45) Bekanntmachung des Hinweises auf die
Patenterteilung :
10.11.93 Patentblatt 93/45

(84) Benannte Vertragsstaaten :
AT BE CH DE DK ES FR GB GR IT LI LU NL SE

(56) Entgegenhaltungen :
DE-A- 3 716 041
DE-C- 3 623 795
FR-A- 1 167 760
US-A- 2 535 034
US-A- 2 998 397

(56) Entgegenhaltungen :
GUMMI, ASBEST, KUNSTSTOFFE. Bd. 36, Nr.
10, 1983, STUTTGARTDE Seiten 540 - 545;
SLUSARSKI ET AL.: 'DER INFLUSS DES ZER-
KLEINERTEN GUMMISAUF ELASTOMEREI-
GENSCHAFTEN'
INTERNATIONAL POLYMER SCIENCE AND
TECHNOLOGY. Bd. 9, Nr. 10, 1982, SHAWBU-
RYGB Seiten 34 - 39; P. ELFFERDING: 'RUB-
BER POWDER AS A SECONDARY RAW
MATERIALFOR THE RUBBER INDUSTRY'

(73) Patentinhaber : Firma Carl Freudenberg
Höhnerweg 2-4
D-69465 Weinheim (DE)

(72) Erfinder : Heckel, Klaus, Dr.
Am Wetzelsberg 6
D-6946 Gorxheimertal (DE)
Erfinder : Arnold, Herbert
Ofenbergstrasse 4
D-6942 Mörlenbach (DE)
Erfinder : Graab, Gerhard, Dr.
Nibelungenring 41
D-6800 Mannheim 24 (DE)

EP 0 433 563 B1

## Beschreibung

Die vorliegende Erfindung betrifft ein Verfahren zur Herstellung einer blasenfreien, kalandrierten Gummibahn.

Zur Herstellung von dekorativen Elastomer-Bahnenwerkstoffen sowie auch von bahnenförmigen Dichtungsmaterialien ist es üblich, im Kalander-Verfahren einen Rohling entsprechender Dicke, z.B. 2 mm, herzustellen und diesen dann einem kontinuierlichen Vulkanisationsprozeß zu unterziehen. Dabei tritt stets das Problem auf, daß kein blasenfreier Rohling entsteht, da im Kalander-Verfahren vorgebildete Blasen in der Rohlingsbahn sich hinterher im Fertigerzeugnis nachteilig bemerkbar machen. Diese Nachteile sind insbesondere ein erhöhter Ausschuß und - bei Anwesenheit nicht erkannter Blasen - Fehlerstellen, die die Funktionsfähigkeit z.B. einer Flachdichtung gefährden.

Die Anzahl und Größe dieser störenden Blasen ist verknüpft mit Art und Mischungszusammensetzung sowie Viskosität der herzustellenden Bahnen; andererseits sind dem Hersteller durch entsprechende Anforderungen Grenzen gesetzt, seien sie technischer Natur, wie z.B. Spezifikationen, seien sie optischer Natur, wie z.B. Anforderungen an das Aussehen des zu fertigenden Produkts, oder auch wirtschaftlicher Natur bei Mischungsveränderungen.

DE-PS 36 23 795 beschreibt die Verwendung einer Fraktion gehärteter Partikel aus elastomerem Material mit Partikelgrößen von 0,1 - 1 mm als Beimischung zu ungehärtetem, elastomerem Material. Damit soll eine definiert unruhige Oberfläche bei den Endprodukten aus Elastomeren erzielt werden. Die hierfür erforderliche Partikelgröße wird durch Mahlen von in flüssigem Stickstoff gekühltem Elastomerteilen in Kugel- oder Prallmühlen erzeugt. Ein solches Verfahren ist aufgrund des hohen Energieverbrauchs sehr unwirtschaftlich. Wird gemäß der o.g. Druckschrift vorgegangen, so kann die Entstehung von Blasen im Vulkanisat nicht unterdrückt werden.

Aufgabe der vorliegenden Erfindung ist es, ohne entscheidende Eingriffe in die Natur der Mischung, durch entsprechende verfahrenstechnische Maßnahmen einen blasenfreien elastomeren Rohling zur Herstellung der vulkanisierbaren Bahnenware zu erzeugen, wobei insbesondere kein Verlust in der Festigkeit der ausvulkanisierten Elastomermasse in Kauf genommen zu werden braucht.

Gelöst wird diese Aufgabe durch ein Verfahren gemäß den Merkmalen des Patentanspruchs 1. Bevorzugte Ausgestaltungen sind in den Unteransprüchen enthalten.

Das Verfahrensprinzip besteht also darin, daß der zu kalandrierenden und zu vulkanisierenden Elastomermasse eine Fraktion von 0,7 mm ± 0,1 mm, meßbar durch Siebanalyse, von vulkanisiertem, zerkleinertem Material im Mischprozeß räumlich homogen zugegeben wird. Die Dosierung beträgt 1 - 4 Gew.%, bezogen auf das Gesamtmischungsgewicht.

Systematische, in den Beispielen näher erläuterte Versuche ergaben, daß nicht allein ein Optimum an Blasenfreiheit in der Elastomermasse erreicht wird, wenn diese genannten Grenzen eingehalten werden. Vielmehr, und das ist eine notwendige Bedingung, kann dabei die Festigkeit der reinen, ausvulkanisierten Elastomermase trotz der Füllstoffzugabe beibehalten werden. Bereits bei einem Füllstoffanteil von wenig über 3 %, z.B. bei 5%, ist eine Abnahme der Zugfestigkeit der Elastomermasse um 10% zu verzeichnen. Diese Abnahme setzt sich bei weiterem Anstieg der Füllstoffpartikel in ähnlichem Umfange fort. Elastomerpartikel-Anteile unter 1% zeigen erwartungsgemäß keine signifikante Wirkung mehr.

Überraschenderweise wurde insbesondere gefunden, daß die Verwendung einer einzigen, definierten Korngröße von 0,7 mm ± 0,1 mm sowohl zu einer völligen Blasenfreiheit der Masse führt als auch die mechanischen Eigenschaften des fertigen Vulkanisats nicht beeinträchtigt. Es wird hierzu auf die Beispiele verwiesen.

Beste Ergebnisse bezüglich der Blasenfreiheit wurden dann gefunden, wenn das eingemischte, zerkleinerte Material eine unregelmäßige Raumstruktur aufweist. Diese Struktur ist mühelos zu erhalten, wenn vulkanisierte Teile, z.B. Produktionsrückstände, in einer Prallmühle vermahlen werden. Eine Kühlung des Mahlgutes ist nicht erforderlich.

In einer weiteren, bevorzugten Ausgestaltung des Verfahrens können auch Oberflächenblasen des Vulkanisats sicher vermieden werden, wenn man vulkanisiertes, zerkleinertes Material in Mengen zwischen 5 und 50 g/m² auf die zu vulkanisierende Masse aufstreut und bis zur Oberflächengleichheit eindrückt. Dabei wird eine glatte Walze verwendet, die einen Druck von 3 - 15 bar auf die Oberfläche erzeugt, wobei die zu vulkanisierende Masse üblicherweise eine Mooney-Viskosität von ML 1+4 bei 100 °C von etwa 120 aufweist.Es wurde gefunden, daß das zerkleinerte Material die Blasenbildung an der Elastomeroberfläche am besten verhindert, wenn es eine Korngröße zwischen 20 und 80 % der gewünschten Dicke des ausvulkanisierten Produktes besitzt.

Der Effekt des Entzuges von Blasen an der Oberfläche kann zusätzlich verstärkt werden durch die Erzeugung einer Prägestruktur auf der Gesamtoberfläche nach dem Auf- bzw. Einbringen des zerkleinerten Materials. Durch das Prägen wird offenbar der Einbettungs- und Entlüftungsprozeß weiter positiv unterstützt. Solche Prägeverfahren sind Stand der Technik; zweckmäßig verwendet man hierzu Walzen mit entsprechend profilierten Oberflächen oder geprägte Papiere, die während des Vulkanisationsprozesses das Prägebild auf die Oberfläche eindrücken.

Das für die Oberfläche verwendete, zerkleinerte Material wird bei technischen Artikeln einfarbig, in gleicher Farbtönung wie die Grundmasse, verwendet werden. Bei z.B. dekorativen Bahnenmaterialien kann man aber auch andersfarbige, ein- oder mehrfarbige Aufstreu-Partikel verwenden. Neben der Blasenfreiheit wird somit ein optischer Effekt erzielt.

Die folgenden Beispiele sollen die Erfindung näher verdeutlichen.

Beispiel 1:

In eine Gummimischung, bestehend aus

| | | |
|---|---|---|
| Styrol-Butadien-Kautschuk mit 23 % Styrolgehalt | 100 | Teile |
| Styrol-Butadien-Copolymer mit 85 % Styrolgehalt | 20 | " |
| Gefällter Kieselsäure | 40 | " |
| Kaolin | 70 | " |
| Gefällter Kreide | 30 | " |
| Cumaron-Inden-Harz | 15 | " |
| Zinkoxid | 5 | " |
| Stearinsäure | 1,5 | " |
| Schwefel | 2,5 | " |
| Polyethylenglykol | 3,0 | " |
| Cyclohexylbenzthiazylsulfenamid | 2.7 | " |
| Tetramethylthiuramdisulfid | 0,5 | ", |

werden jeweils folgende Mengen von Mahlgut mit folgenden mittleren Teilchendurchmessern eingemischt:

Tabelle 1:

| Menge pro 100 g Mischung: | | 1 g | 3 g | 5 g | 7 g | 15 g |
|---|---|---|---|---|---|---|
| mittlere Teilchengröße | | | | | | |
| 0,1 mm | Versuch | A | B | C | D | E |
| 0,7 mm | | F | G | H | I | J |
| 1,5 mm | | K | L | M | N | O |
| 7,0 mm | | P | Q | R | S | T |

Parallel dazu erfolgt noch mit der oben beschriebenen Mischung die sog. Nullprobe, d.h. ohne Einmischung von bereits vulkanisiertem Material.

Die Ergebnisse sind der nachfolgenden Tabelle 2 zu entnehmen:

Tabelle 2:

| Mischung | Anzahl der Blasen pro m² in der in der auf einem Dreiwalzen-kalander bei 80°C hergestellten und bei 170°C auf der Vulkani-sationsanlage kontinuierlich vulkanisierten Bahn; Preßdruck: 10 bar; Bahnendicke: 2 mm; Arbeitsgeschwindigkeit: 80 m/h |
|---|---|
| A | 14 |
| B | 12 |
| C | 11 |
| D | 11 |
| E | 10 |
| F | 2 |
| G | 0 |
| H | 2 |
| I | 4 |
| J | 7 |
| K | 4 |
| L | 2 |
| M | 3 |
| N | 7 |
| O | 12 |
| P | 12 |
| Q | 10 |
| R | 10 |
| S | 16 |
| T | 18 |
| Nullprobe | 15 |

Die Zugfestigkeiten der bei 170°C vulkanisierten Mischungen zeigen den Einfluß von Korngröße und Zugabemenge an Gummimahlgut und sind nachfolgend an den Mischungen B, G, L, Q und F, G, H, I aufgelistet.

Tabelle 3:

| Mischung | Zugfestigkeit in MPa |
|---|---|
| B | 9,2 |
| G | 9,1 |
| L | 8,7 |
| Q | 7,9 |
| F | 9,2 |
| G | 9,1 |
| H | 8,8 |
| I | 8,0 |
| J | 7,2 |
| Nullprobe | 9,3 |

Man kann deutlich erkennen, daß die Erzielung eines blasenfreien Materials besonders günstig mit einem Korn mit der mittleren Korngröße von 0,7 mm sichergestellt werden kann. Wie die ermittelten Zugfestigkeiten an den beispielhaft angegebenen Mischungen zeigen, fällt die Festigkeit bei einer Menge über 3 %, besonders deutlich über 5 %, ab um jeweils ca. 10 % des Ausgangswertes.

Beispiel 2:

In eine Gummimischung, bestehend aus

| | | |
|---|---|---|
| Acrylnitril-Butadien-Kautschuk mit 28 % Acrylnitril | 100 | Teile |
| Stryrol-Butadien-Copolymer mit 60 % Styrolgehalt | 20 | " |
| Gefällter Kieselsäure | 20 | " |
| Kaolin | 60 | " |
| Gefällter Kreide | 20 | " |
| Zinkoxid | 5 | " |
| Stearinsäure | 1,5 | " |
| Schwefel | 2,7 | " |
| Diethylenglykol | 3,2 | " |
| Cyclohexylbenzthiazylsulfenamid | 2,9 | " |
| Tetramethylthiuramdisulfid | 0,7 | ", |

werden bei sonst gleichen Parametern und gleicher Vorrichtung wie in Beispiel 1 jeweils folgende Mengen Mahlgut der bevorzugten Korngröße von 0,7 mm eingemischt und die Blasen in der Bahn nach dem Kalandrieren und dem kontinuierlichen Vulkanisieren ausgezählt:

Tabelle 4:

| Menge in % | 1 | 3 | 5 | 7 | 15 |
|---|---|---|---|---|---|
| Blasen/m² | 6 | 0 | 4 | 7 | 12 |
| Zugfestigkeit (MPa) | 12,0 | 11,5 | 10,5 | 9,6 | 7,1 |

Wie Beispiel 2 zeigt, werden die Ergebnisse aus Beispiel 1 bestätigt, die gezeigt haben, daß bei einer bevorzugten Korngröße von 0,7 mm und einer Einmischung von vorzugsweise 3 %, bezogen auf die Gesamtmischung, an entsprechend zerkleinertem, ausvulkanisiertem Material der beschriebene Effekt einer blasenfreien Bahn ohne Einbuße bei der Zugfestigkeit erzielt werden kann.

**Patentansprüche**

1. Verfahren zur Herstellung einer blasenfreien, kalandrierten Gummibahn, in dem man der noch ungehärteten Gummimasse, vor der Vulkanisation, eine Fraktion vulkanisierten, zerkleinerten Materials mit unregelmäßiger Grundstruktur in räumlich gleichmäßiger Verteilung beimischt, wobei man eine durch Siebanalyse ermittelbare Partikelgröße des Materials von 0,7 mm ± 0,1 mm wählt bei einer Dosierung von 1 - 4 Gew.%, bezogen auf das Gesamtmischungsgewicht, und wobei man anschließend das Gemisch ausvulkanisiert.

2. Verfahren nach Anspruch 1, dadurch gekennzeichnet, daß man zusätzlich, unmittelbar vor der Vulkanisation, auf die Oberfläche der Gesamtmischung vulkanisiertes, zerkleinertes Material mit einer Korngröße von 20 - 80 % der gewünschten Enddicke der Gummibahn gleichmäßig aufstreut in einer Menge zwischen 5 und 50 g/m², und daß man anschließend mittels einer glatten Walze bei einem Druck von 3 - 15 bar das aufgestreute Material bis zum Oberflächen-Niveau der Gummimasse eindrückt.

3. Verfahren nach Anspruch 2, dadurch gekennzeichnet, daß man als letzten Schritt vor der Vulkanisation die Oberfläche des Vulkanisates mit einer Prägestruktur versieht.

**Claims**

1. A process for producing a blister-free calendered rubber web, in which a fraction of vulcanised, comminuted material with irregular basic structure is added in spatially uniform distribution to the still-uncured rubber stock before vulcanisation, a particle size, determinable by screen analysis, of 0.7 mm ± 0.1 mm being chosen for the material, the amount metered in being 1-4% by weight, based on the weight of the entire composition, and the composition being subsequently completely vulcanised.

2. A process according to Claim 1, characterised in that in addition, directly before vulcanisation, vulcanised, comminuted material with a grain size of 20 - 80 % of the desired final thickness of the rubber web is additionally uniformly scattered in an amount of from 5 to 50 g/m² on the surface of the entire composition, and in that subsequently the scattered-on material is pressed in down to the surface level of the rubber stock using a smooth roller at a pressure of 3 - 15 bar.

3. A process according to Claim 2, characterised in that, as a last stage before vulcanisation, the surface of the vulcanised material is provided with an embossed structure.

EP 0 433 563 B1

## Revendications

1. Procédé de réalisation par calandrage sans bulles d'un ruban en caoutchouc dans lequel on mélange à la masse de caoutchouc encore non durcie, avant la vulcanisation, une fraction de matériau vulcanisé fragmenté à structure de base irrégulière avec une répartition spatiale régulière en choisissant une granulométrie du matériau par tamisage égale à 0,7 mm ± 0,1 mm, avec un dosage de 1 à 4% en poids rapporté au poids total du mélange, et dans lequel le mélange est ensuite vulcanisé.

2. Procédé selon la revendication 1, caractérisé en ce que, immédiatement avant la vulcanisation, on répartit uniformément sur la surface du mélange global un matériau fragmenté et vulcanisé ayant une granulométrie comprise entre 20 et 80% de l'épaisseur finale souhaitée du ruban de caoutchouc, en quantité comprise entre 5 et 50 g/m² et que l'on enfonce le matériau ainsi répandu jusqu'au niveau de la surface au moyen d'un cylindre lisse et sous une pression de 3 à 15 bar.

3. Procédé selon la revendication 2, caractérisé en ce que l'on confère à la surface du produit à vulcaniser une structure gaufrée comme dernière étape avant la vulcanisation.

7